# EUROPEAN PATENT APPLICATION

(11) **EP 4 694 525 A1**
(43) Date of publication of application: **11.02.2026**
(21) Application number: 23929233.7
(22) Date of filing: 29.03.2023
(51) Int. Cl.: H04W 74/08

(54) **WIRELESS COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: Grassi, Stefano
(86) International application number: PCT/CN2023/084675
(87) International publication number: WO 2024/197634

(57) **Abstract**

Provided are a wireless communication method and a communication device. The method comprises: a first device performing channel access on a plurality of channels, so as to determine a first channel set; and the first device sending first information to a second device, wherein the first information is associated with the first channel set. In the embodiments of the present application, a first device can perform channel access on a plurality of channels, so as to determine a first channel set, and send, to a second device, first information associated with the first channel set; and as such, the second device can perform communication on the basis of the first channel set. Therefore, the case in a traditional solution of the second device being unable to acquire an available channel due to the second device lacking a channel access capability is avoided, and an improvement in the possibility of the second device obtaining an available channel is facilitated.

## Description

### TECHNICAL FIELD

The disclosure relates to the technical field of communication, and more particularly to a method for wireless communication and a communication device.

### BACKGROUND

Currently, to ensure fairness in channel usage, if a second device needs to occupy a channel in the unlicensed spectrum to send data, it is needed to perform channel access (for example, to perform channel sensing) to determine whether the channel is idle. However, in some scenarios, the second device lacks the capability of performing channel access, and at this time, the second device cannot determine an available channel.

### SUMMARY

The disclosure provides a method for wireless communication and a communication device. The following is an introduction to various aspects involved in the disclosure.

In a first aspect, a method for wireless communication is provided, and the method includes the following operations. A first device performs channel access on multiple channels to determine a first channel set. The first device sends first information to a second device. The first information is associated with the first channel set.

In a second aspect, a method for wireless communication is provided, and the method includes the following operations. A second device receives first information sent by a first device. The first information is associated with a first channel set determined by the first device through channel access on multiple channels.

In a third aspect, a communication device is provided. The communication device is a first device, and includes a processing unit and a sending unit. The processing unit is configured to perform channel access on multiple channels to determine a first channel set. The sending unit is configured to send first information to a second device. The first information is associated with the first channel set.

In a fourth aspect, a communication device is provided. The communication device is a second device, and includes a receiving unit. The receiving unit is configured to receive first information sent by a first device. The first information is associated with a first channel set determined by the first device through channel access on multiple channels.

In a fifth aspect, a communication device is provided. The communication device includes a processor, a memory and a communication interface. The memory is used to store one or more computer programs. The processor is configured to invoke the one or more computer programs in the memory to cause a terminal device to perform some or all of operations in any of the methods of the aforementioned various aspects.

In a sixth aspect, a communication system is provided in an embodiment of the disclosure. The communication system includes the first device and/or the second device described above. In another possible design, the system may also include other devices that interact with the terminal device or the network device in solutions according to embodiments of the disclosure.

In a seventh aspect, a computer-readable storage medium is provided in an embodiment of the disclosure. The computer-readable storage medium has stored thereon a computer program that causes a communication device (e.g., a first device or a second device) to perform some or all of operations in any of the methods of the aforementioned various aspects.

In an eighth aspect, a computer program product is provided in an embodiment of the disclosure. The computer program product includes a non-transitory computer-readable storage medium storing a computer program. The computer program is operable to cause a communication device (e.g., terminal device or network device) to perform some or all of operations in any of the methods of the aforementioned various aspects. In some implementations, the computer program product may be a software installation package.

In a ninth aspect, a chip is provided in an embodiment of the disclosure. The chip includes a memory and a processor. The processor may invoke and run a computer program from the memory to implement some or all of operations described in any of the methods of the aforementioned various aspects.

In the embodiments of the disclosure, a first device may perform channel access on multiple channels to determine a first channel set, and the first device sends first information associated with the first channel set to a second device. At this time, the second device may perform communication based on the first channel set. Therefore, the situation in traditional solutions where the second device fails to acquire an available channel due to its lack of channel access capability is avoided, thereby improving the probability of obtaining an available channel by the second device.

### BRIEF DESCRIPTION OF THE DRAWINGS

FIG. 1 is a schematic diagram of a wireless communication system 100 applied in an embodiment of the disclosure.
FIG. 2 is a schematic diagram of a physical layer protocol data unit (PPDU) frame applicable to an embodiment of the disclosure.
FIG. 3 is a schematic diagram of a media access control (MAC) frame structure applicable to an embodiment of the disclosure.
FIG. 4 is a schematic flowchart of a method for wireless communication according to an embodiment of the disclosure.
FIG. 5 is a schematic diagram of a first channel set according to an embodiment of the disclosure.
FIG. 6 is a schematic diagram of a frequency hopping pattern within the first channel set performed by the second device in an embodiment of the disclosure.
FIG. 7 is a schematic diagram of a method for indicating a target channel by first information in an embodiment of the disclosure.
FIG. 8 is a schematic diagram of a communication device in an embodiment of the disclosure.
FIG. 9 is a schematic diagram of a communication device in another embodiment of the disclosure.
FIG. 10 is a schematic structural diagram of a communication apparatus according to an embodiment of the disclosure.

### DETAILED DESCRIPTION

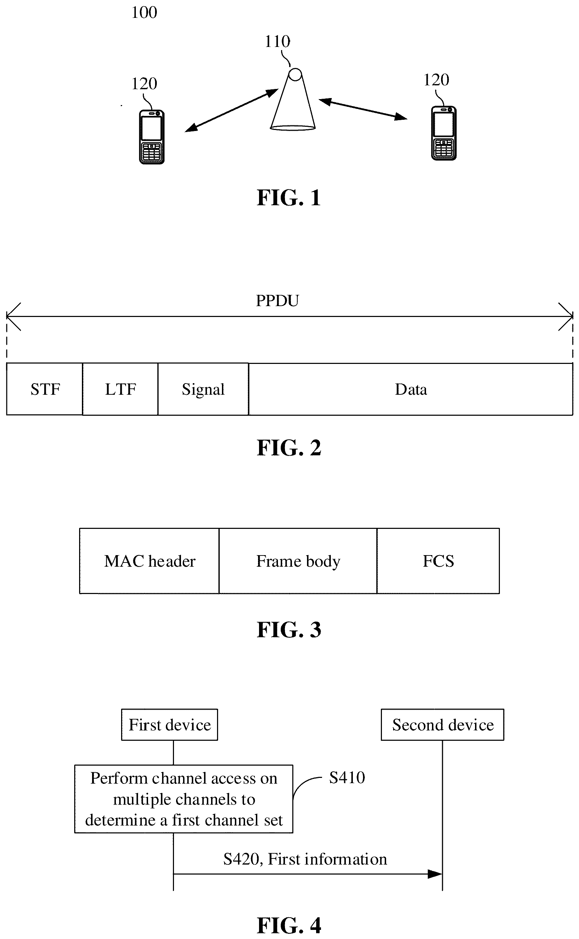

Hereinafter, the technical solutions in the disclosure will be described in conjunction with the accompanying drawings. For convenience of understanding, the communication terms and communication processes involved in the embodiments of the disclosure will be introduced below in conjunction with FIG. 1 to FIG. 3.

### Wireless communication system

Hereinafter, the wireless communication system applicable to an embodiment of the disclosure is introduced below in conjunction with FIG. 1. FIG. 1 illustrates architecture of the wireless communication system 100 applicable to an embodiment of the disclosure. It should be understood that the technical solutions in the embodiments of the disclosure may be applied to various communication systems, such as: a 5th generation (5G) system or a new radio (NR) system, a long term evolution (LTE) system, an LTE frequency division duplex (FDD) system, an LTE time division duplex (TDD) system, a cellular Internet of Things, a wireless fidelity (WIFI) system, and the like. The technical solutions provided in the disclosure may also be applied to future communication systems, such as a 6th generation mobile communication system and so on.

The architecture illustrated in FIG. 1 includes a first device 110 and a second device 120. In some implementations, the first device may be a network device, a terminal device, a wireless access point (AP), a relay device, or a control node. In other implementations, the second device may be a terminal device, a station (STA).

In some scenarios, assuming that the first device 110 may be a network device 110 and the second device 120 may be a terminal device 120. The network device 110 may be a device that communicates with the terminal device 120. The network device 110 may provide communication coverage for a particular geographic area and communicate with the terminal device 120 within that coverage area.

The terminal in the embodiments of the disclosure may also be referred to as a user equipment (UE), an access terminal, a subscriber unit, a subscriber station, a mobile station, a mobile station (MS), a mobile terminal (MT), a remote station, a remote terminal, a mobile device, a user terminal, a terminal device, a wireless communication device, a user agent or a user device. The terminal device in the embodiments of the disclosure may be a device that provides voice and/or data connectivity to a user, and may be used to connect people, objects and machines, such as household appliances, sensors, electronic tags, etc. with wireless connection functions. The terminal in the embodiments of the disclosure may be a wireless terminal in a smart home, a wireless terminal in an industrial wireless sensor network (IWSN), a wireless terminal in smart logistics and smart warehousing, a wireless terminal in self driving, a wireless terminal in a remote medical surgery, a wireless terminal in a smart grid, a wireless terminal in transportation safety, a wireless terminal in a smart city, or the like.

The network device in the embodiments of the disclosure may be a device for communicating with the terminal device. The network device may also be an access network device or a wireless access network device. For example, the network device may be a base station. The network device in the embodiments of the disclosure may be a radio access network (RAN) node (or device) that accesses the terminal device to a wireless network. The base station may broadly cover or be interchangeable with various names, such as a NodeB, an evolved NodeB (eNB), a next generation NodeB (gNB), a relay station, an access point, a transmitting and receiving point (TRP), a transmitting point (TP), a primary station MeNB, a secondary station SeNB, an MSR node, a home base station, a network controller, an access node, a wireless node, an access point (AP), a transmitting and receiving node, a transceiver node, a base band unit (BBU), a remote radio unit (RRU), an active antenna unit (AAU), a remote radio head (RRH), a central unit (CU), a distributed unit (DU), a positioning node, and the like. The base station may be a macro base station, a micro base station, a relay node, a donor node, or the like, or a combination thereof. The base station may also be a communication module, a modem, or a chip disposed within the aforementioned devices or apparatuses. The base station may also be a mobile switching center, a device that functions as a base station in device-to-device D2D, vehicle-to-everything (V2X), machine-to-machine (M2M) communications, a network-side device in a 6G network, a device that functions as a base station in a future communication system, or the like. The base station may support networks of the same or different access technologies. The specific technology and the specific equipment form employed by the network device are not limited in the embodiments of the disclosure.

The base station may be fixed or mobile. For example, a helicopter or drone may be configured to act as a mobile base station, and one or more cells may move based on the location the mobile base station. In other examples, a helicopter or drone may be configured to act as a device that communicates with another base station.

In some deployments, the network device in the embodiments of the disclosure may be a CU or a DU, or the network device may include a CU and a DU. The gNB may also include an AAU.

The network device and the terminal device may be deployed on land, including indoor or outdoor, handheld or vehicle-mounted. The network device and the terminal device may also be deployed on the water. The network device and the terminal device may also be deployed on aircrafts, balloons and satellites in the air. The scenarios in which the network device and the terminal device are located are not limited in the embodiments of the disclosure.

It should be understood that all or part of the functions of the communication device in the disclosure may also be implemented by software functions running on hardware, or by virtualized functions instantiated on a platform (e.g., a cloud platform).

In other scenarios, taking a WIFI system as an example, continuing with reference to FIG. 1, the first device 110 may be an AP. Accordingly, the second device 120 may be an STA. The AP is used to create a wireless network to provide wireless network services for the STA.

It should be noted that, FIG. 1 exemplifies one first device and one second device. Optionally, the communication system 100 may include multiple first devices, and the coverage of each first device may include another number of second devices, which is not limited in the embodiments of the disclosure.

**In** addition, in some implementations, the communication system 100 may further include other network entities, such as a network controller, a mobility management entity, and the like, which is not limited in the embodiments of the disclosure.

With the development of wireless communication technology, there is a growing demand to integrate wireless communication systems with various vertical industries such as logistics, manufacturing, transportation and energy. For example, a wireless communication system may be integrated with an industrial wireless sensor network (IWSN). For another example, a wireless communication system may be integrated with smart logistics and smart warehousing. For another example, a wireless communication system may be integrated with a smart home network. However, in these industries, the terminal device typically needs to have features such as lower cost, smaller size (such as ultra-thin), maintenance-free and long service life. Therefore, to satisfy the above conditions, a zero-power device is introduced into the wireless communication system.

For example, the second device 120 illustrated in FIG. 1 may be a zero-power device. Accordingly, the first device 110 illustrated in FIG. 1 may be an energy supply device. That is to say, the first device 110 may supply power to the second device by sending a power supply signal to the second device 120.

It should be noted that in the embodiments of the disclosure, from the perspective of power supply methods, the zero-power device may be categorized to include an environmental energy-based device (such as an ambient powered IoT (AMP IoT) device), a battery-free terminal, and a maintenance-free terminal, etc. For convenience of understanding, the following sections provide introductions to the zero-power device and the environmental energy-based device, respectively.

### Zero-power device

The first device and the second device may communicate with each other by using zero-power communication technology. In such case, the second device may also be referred to as a "zero-power communication device", a "zero-power device", a "zero-power communication terminal", or a "zero-power terminal".

A zero-power terminal, as the name implies, is a terminal device that consumes minimal or even negligible amounts of its own energy during communication processes. Currently, the zero-power terminal has one or more of the following advantages.

Advantage 1: since the zero-power terminal does not need to transmit signal transmission actively, it eliminates the need for constructing complex radio frequency paths. For example, devices such as a power amplifier (PA) and an RF filter may not be provided in the radio frequency path to reduce the cost and volume of the terminal.

Advantage 2: since the zero-power terminal does not need to actively generate high-frequency signals, it eliminates the need for a high-frequency crystal oscillator, thereby reducing the cost and volume of the terminal.

Advantage 3: since the zero-power terminal may communicate with the network device by using backscatter technology, the terminal consumes relatively low energy during communication, and may even operate without consuming its own energy.

In the zero-power communication technology, based on the energy source of the terminal and the manner in which energy is utilized, the zero-power terminal may be divided into three categories: a passive zero-power terminal, a semi-passive zero-power terminal and an active zero-power terminal.

### 1. Passive zero-power terminal.

The passive zero-power terminal typically does not require a built-in battery. When the passive zero-power terminal approaches the network device, the passive zero-power terminal is in the near-field range formed by the radiation of the antenna of the network device. At this time, the antenna of the passive zero-power terminal may generate an induced current through electromagnetic induction, and the induced current may supply energy to the passive zero-power terminal and drive the low power chip circuit of the passive zero-power terminal, thereby realizing the demodulation of the forward link signal and the modulation of the backward link signal. For the back scattering link, the passive zero-power terminal may perform signal transmission by using a backscatter implementation approach.

From the introduction above, it can be seen that the passive zero-power terminal, whether based on the forward link transmission process or the backward link transmission process, does not require a built-in battery to drive the transmission process, and thus, the passive zero-power terminal is a zero-power terminal in true sense.

In some implementations, the passive zero-power terminal may be an electronic tag. Accordingly, the network device may be a reader/writer of a radio frequency identification (RFID) system for reading and/or changing contents in the electronic tag.

### 2. Semi-passive zero-power terminal.

The semi-passive zero-power terminal itself is not equipped with a conventional battery, but it may use a power harvesting module (e.g., an RF power harvesting module) to harvest energy of radio waves and store the harvested energy in an energy storage unit (such as a capacitor). After the energy storage unit obtains energy, it can supply energy to the zero-power terminal to drive the low power chip circuit. Therefore, the demodulation of the forward link signal and the modulation of the backward link signal are realized. For the back scattering link, the zero-power terminal performs signal transmission by using a backscatter implementation approach.

From the introduction above, it can be seen that the semi-passive zero-power terminal, whether based on the forward link transmission process or the backward link transmission process, does not require a built-in battery to drive the transmission process. Although the energy stored in the capacitor is used in the operation, the energy comes from the radio energy harvested by the power harvesting module, and thus, the semi-passive zero-power terminal is also a true zero-power terminal in its literal sense.

### 3. Active zero-power terminal

The active zero-power terminal may be equipped with a built-in battery. The battery may supply power to the active zero-power terminal to drive the low power chip circuit of the active zero-power terminal. Therefore, works such as the demodulation of the forward link signal and the modulation of the backward link signal are realized. For the back scattering link, the active zero-power terminal performs signal transmission by using a backscatter implementation approach. Therefore, the zero-power of this type of terminal is mainly reflected in the fact that the signal transmission of the back scattering link does not consume power from the terminal itself, but instead uses the back scattering manner.

Since the active zero-power terminal may be powered by the built-in battery, the communication distance of the active zero-power terminal may be increased, thereby improving the reliability of communication. Therefore, the active zero-power terminal may be applied in some scenarios that have relatively high requirements in terms of communication distance and read latency.

In some implementations, the active zero-power terminal may be an electronic tag, the network device may be an RFID reader/writer. At this time, the built-in battery may supply power to the RFID chip in the electronic tag to increase the read/write range between the RFID reader/writer and the electronic tag. On the other hand, the built-in battery may supply power to the RFID chip in the electronic tag, so as to shorten the read/write latency of the RFID reader to the electronic tag, which is conducive to enhance the reliability of communication.

### Cellular passive Internet of Things (IoT)

As introduced earlier, in some industries, the terminal device typically needs to have features such as lower cost, smaller size (such as ultra-thin), maintenance-free and long service life. Therefore, the application of battery-free and low-cost passive IoT device has become a key technology for cellular IoT. The passive IoT device may be based on the zero-power terminal introduced above and extended on this basis to be suitable for cellular IoT. Therefore, a new device is currently introduced on the basis of the zero-power device, that is, an environmental energy-based device.

### Environmental energy-based device

In known wireless communication systems (e.g., NR systems and WiFi systems), the environmental energy-based device is similar to the passive zero-power device or the semi-passive zero-power devices in the zero-power communication. The energy required for the operation of the environmental energy-based device typically comes from environmental energy harvesting, and the environmental energy source may be wireless signals, solar energy, thermal energy, etc. Such devices have the advantages like low cost and battery-free, and may support advantages, such as low-cost, large-scale deployment, and maintenance-free, of IoT devices. Therefore, in the current standard, it is studied how to support such devices in existing wireless communication systems.

In the embodiments of the disclosure, the environmental energy-based device may be referred to as an ambient IoT device or an AMP IoT device.

### Information transmission in WiFi System

Currently, information of a WIFI device may be transmitted based on a PPDU frame. In some implementations, the PPDU frame includes a physical layer header and a data portion.

Referring to FIG. 2, it is specified in some protocols (e.g., 802.11 a/g) that the physical layer header may include three parts: a short training field (STF), a long training field (LTF), and a SIGNAL. That is to say, the physical layer header carries the STF, the LTF, and some specific configurations for the data portion. The first part is the STF, which primarily consists of 10 short symbols (t1 - t10), with each symbol lasting 0.8 us. The STF encompasses multiple functions, primarily serving to achieve frame synchronization and coarse frequency synchronization. Among them, t1 - t7 primarily incorporate functions such as signal detect, automatic gain control (AGC), and diversity selection, while t8 - t10 primarily incorporate functions such as coarse frequency (Coarse Freq) synchronization, offset estimation and timing synchronize. The second part is the LTF, which realizes fine frequency synchronization and channel estimation. The SIGNAL part carries information related to the data portion, including data transmission rate, length information of the data packet (Length), reserved bits and tail bits.

Referring to FIG. 3, the data portion may carry a MAC frame, and the frame format of the MAC frame includes a MAC header, a frame body, and a frame check sequence (FCS).

### Unlicensed spectrum

The unlicensed spectrum is the spectrum that may be used for communications between radio devices divided by countries and regions. The unlicensed spectrum is generally considered to be a shared spectrum. That is, as long as communication devices in different communication systems meet the regulatory requirements set by the countries and regions in the unlicensed spectrum, the unlicensed spectrum can be used, and there is no need to apply for a dedicated spectrum license from the government. The unlicensed spectrum may also be referred to as a shared spectrum, a license-free spectrum, a license-exempt spectrum, an unlicensed band, a license-exempt band, or a license-free band.

To enable various communication systems that use unlicensed spectrum for wireless communication to coexist friendly on this spectrum, some countries or regions have specified regulatory requirements that must be met when operating in unlicensed spectrum. For example, the communication device follows the principle of "listen before talk (LBT)". That is to say, the communication device needs to perform channel sensing firstly before transmitting signals on the channel of the unlicensed spectrum. Only when the channel sensing result is that the channel is idle, the communication device can transmit signals. If the channel sensing result of the communication device on the channel of the unlicensed spectrum is that the channel is busy, the communication device cannot transmit signals. To ensure fairness, in one transmission, the time duration of the signal transmission performed by a communication device using the channel of the unlicensed spectrum cannot exceed a maximum channel occupancy time (MCOT).

Currently, technologies using unlicensed spectrum have been standardized in cellular communication systems. For example, the NR-U technology of 3GPP Rel-16 uses license-free band below 7 GHz. In subsequent technological evolution, the use of unlicensed spectrum in higher bands, such as 52.6 GHz - 71 GHz discussed in the Rel-17 standard, will be considered. In addition, the widely used WiFi technology is also a communication technology based on the unlicensed band.

### Channel access mechanism

In some protocols (e.g., 802.11 protocol), a channel access protocol for unlicensed spectrum, namely, a distributed coordination function (DCF), is specified, which introduces a carrier sense multiple access with collision avoidance (CSMA/CA or CCA) mechanism, so that different compatible STA devices can share usage of channels and the probability of collision can be reduced.

In some implementations, the DCF mainly includes four core mechanisms: a carrier sense mechanism, an interframe space (IFS) mechanism, a random backoff mechanism, and a request to send/clear to send (RTS/CTS) handshake mechanism. The above four mechanisms are respectively introduced below.

### Carrier sense mechanism

In some implementations, the carrier sense mechanism may be divided into physical carrier sense and virtual carrier sense. Generally, a channel is busy when any one of the sensing result indicates that the channel is busy.

The physical carrier sense typically adopts three channel idle detection methods: energy detection, carrier detection and hybrid energy-carrier detection, collectively referred to as clear channel assessment (CCA). The energy detection is to determine the magnitude of the energy of the received signal. When the received power is greater than the threshold specified in the physical layer (represented by "ED _ threshold"), the channel is considered to be occupied. The carrier detection is performed by detecting the preamble portion of the signal in the channel, and determining whether the channel is occupied based on the detection result.

The virtual carrier sense mechanism is provided by the MAC, and in some protocols (e.g., 802.11), the virtual sense is implemented by using a network allocation vector (NAV). The "duration" is stored in the Dur/ID field in the MAC frame. For the STA that receives this information, the STA determines the duration for which the channel will be occupied and calculates the required delay time for its own transmission. The NAV is a timer, which is used to define how much longer the current channel will remain occupied. The initial value of the timer is the duration of the last received frame, and the timer counts down to 0 and then expires. Each sensing STA uses the NAV timer. During data communication, the STA occupying the channel will inform other STAs of how long it still needs to use the channel through the duration field in the frame, while the STA that has not acquired the channel updates the value of its own NAV by comparing the duration value in the received packet. The current channel is considered idle only when the NAV value is 0 and the physical carrier sense indicates that the channel is idle.

### IFS mechanism

To avoid collision as much as possible, it is specified in some protocols (e.g., 802.11) that after completing sending, each STA needs to wait for a short period of time (while continuing to listening) before sending a next frame. The general term for this period of time is the interframe space. The duration of the interframe space depends on the type of frame that the STA intends to send. Generally, high-priority frames have a shorter waiting time, and thus gain transmission access first, whereas low-priority frames needs to wait for a longer time. In some scenarios, if low-priority frames have not yet been sent and other high-priority frames have been sent to the medium (e.g., channel), the medium becomes busy, so that the transmission of the low-priority frames is further postponed, thereby reducing the chance of collisions.

The IFS provides different access priorities to the wireless medium, and different priorities are classified based on the durations of respective IFSs. The shorter the duration is, the higher the corresponding priority is. The values of the inter frame spaces, ordered from smallest to largest, may include a short inter frame space (SIFS), a point coordination inter frame space (PIFS), a distributed inter-frame spacing (DIFS), and an extended inter frame spacing (EIFS).

For SIFS, it is currently the shortest time period and may be used to interval frames that require immediate response, such as control frames (RTS/CTS frames, ACK frames), etc. Using the shortest inter frame space between two transmissions in the frame exchange sequence may prevent other STAs waiting for the medium from attempting to utilize the medium.

For PIFS, it may currently only be used by STAs operating in point coordination function (PCF) mode.

For DIFS, it may currently only be used by STAs operating in distributed coordination function (DCF) mode.

For EIFS, when an error occurs in the previous frame, the sending node has to delay an EIFS duration rather than a DIFS duration and then sends the next frame.

### Random backoff mechanism

In some protocols (e.g., 802.11), binary exponential backoff method is adopted to determine the backoff time required when a node fails to send or a conflict occurs. When the MAC layer has a frame that needs to be sent, after both physical carrier sense and virtual carrier sense indicate that the channel is idle, if the counter of the backoff window is not 0, it then continues to decrement the counter in units of slot time; otherwise, a backoff window is randomly generated for backoff. The node selects a random backoff counter based on a random number in the contention window. After the backoff time is selected, it is equivalent to setting a backoff timer. The value of the contention window is a parameter value that lies between the minimum contention window CWmin and the maximum contention window CWmax, as specified by the physical characteristic value, which is used for the node to select the range of the random backoff counter. The STA continuously listens for the channel within the slot time. If it is detected that the channel is idle, the backoff timer continues to count down by one. If it is detected that the channel is busy, the remaining time of the backoff timer is frozen, and after waiting for the channel to become idle again and the time DIFS elapses, the backoff timer resumes counting down from the remaining time. When the backoff timer decreases to zero, the STA starts to a send the entire data frame.

### RTS/CTS handshake mechanism

The RTS/CTS mechanism is introduced in some protocols (e.g. IEEE 802.11), and the mechanism is a mechanism employed to reduce collisions caused by hidden node problem. The basic idea of the RTS/CTS mechanism is to reserve the channel through short control packets. If a sending STA intends to send a message to a receiving STA, it must first send an RTS control frame. After a STA around the sending STA receive the RTS, the STA sets its own network allocation vector (NAV) value based on duration field. After receiving the RTS, the receiving STA replies with a CTS control frame. After a STA around the receiving STA receive the CTS, the STA sets its own NAV value based on duration field. A STA with a non-zero NAV value is prohibited from performing channel idle monitoring, thereby avoiding collisions of transmissions between the sending STA and the receiving STA.

As previously introduced, the utilization of unlicensed bands is also a critical deployment scenario in wireless communication systems. Currently, to ensure fairness in channel usage, if a second device needs to occupy a channel in the unlicensed spectrum to send data, it is required to perform channel access (for example, to perform channel sensing) to determine whether the channel is idle. However, in some scenarios, the second device does not have the ability to access the channel. At this time, if the second device forcibly occupies the channel for communication, it will conflict with other devices, resulting in communication failure.

Taking the fact that the second device is a zero-power terminal as an example, due to its power consumption limitation, the zero-power terminal may only support simple modulation and demodulation methods, such as amplitude-shift keying (ASK) and frequency-shift keying (FSK), but does not support orthogonal frequency division multiplexing (OFDM). The PPDU frame transmitted in the WiFi system is based on OFDM modulation. At this time, in a scenario where the WiFi system occupies the unlicensed spectrum to transmit the PPDU frame, the zero-power terminal cannot sense the PPDU frame transmitted in the channel to determine whether the channel is idle, because it does not support the OFDM modulation method. At this time, if the second device forcibly occupies the channel for communication, it will conflict with other devices, resulting in communication failure.

Therefore, in view of the above problem, a method for wireless communication is provided in an embodiment of the disclosure. In this solution, the first device may assist the second device in performing channel sensing in the unlicensed spectrum, and indicate to the second device a channel that has obtained channel access, for data transmission by the second device. That is to say, in some implementations, the first device may send first information to the second device, and the first information is used to determine a channel accessible to the second device in the unlicensed spectrum. This helps reduce the probability that the second device collides with other devices when communicating on unlicensed spectrum.

At present, to meet the fairness of different devices in using the unlicensed spectrum and reduce mutual interference, different countries and regions have formulated different specifications for the use of unlicensed spectrum (for example, unlicensed spectrum below 1 GHz). For example, some countries (e.g. PRC) specify that the operating mode of communication device in unlicensed spectrum is a frequency hopping pattern. The frequency hopping pattern may be understood as a communication device operating across multiple channels in a frequency hopping manner. That is to say, the communication device may operate on one channel during a certain period of time, and then, the communication device may switch to operate on another channel during the next period of time.

Based on the above introduction of frequency hopping pattern, it can be seen that the communication device needs to perform frequency hopping across multiple channels. When the communication device is the second device described above, during each frequency hopping process, the second device needs the first device to indicate the frequency hopping channel, resulting in a large transmission overhead for channel indication.

Therefore, in view of the above problem, a method based on wireless communication is provided in an embodiment of the disclosure. In this method, the first device may indicate the first channel set to the second device through the first information, so that the second device may communicate based on the first channel set, which helps to reduce the transmission overhead for channel indication by the first device to the second device. That is to say, since the second device (e.g., the zero-power terminal) cannot support the channel access mechanism, it requires the assistance of the first device serving it to use the channel for data sending. Accordingly, the first device may perform multi-channel access for transmission of the second device, which helps to reduce the transmission overhead for channel indication by the first device to the second device. Hereinafter, a method for wireless communication in an embodiment of the disclosure is introduced in conjunction with FIG. 4.

FIG. 4 is a schematic flowchart of a method for wireless communication according to an embodiment of the disclosure. The method illustrated in FIG. 4 includes operation S410 and operation S420.

In operation S410, a first device performs channel access on multiple channels to determine a first channel set.

In some implementations, the first channel set may include one or more channels. The introduction of the first channel set is provided in Embodiment 1 below. For brevity, it will not be repeated herein.

In some implementations, the multiple channels may be located in unlicensed spectrum. For example, the unlicensed spectrum may include spectrum below 1 GHz, and the supported channel bandwidths include 1 MHz, 2 MHz, 4 MHz, 8 MHz, and 16 MHz. Among them, 1 MHz and 2 MHz are the basic channel bandwidths. For another example, in China, the unlicensed spectrum may include a band of 920 MHz - 925 MHz, where the utilization based on radio frequency identification requires a channel bandwidth of no more than 250 kHz. The channel center frequency fc may be determined based on the formula: f(c)(MHz) = 920.125 + M × 0.25. M is an integer and its value may range from 0 to 19. In other implementations, the multiple channels may be located in other spectra where channel access is required. It is not limited in the embodiments of the disclosure.

In the embodiments of the disclosure, there are no restrictions on the channel access method. Taking the unlicensed spectrum as an example, the channel access process may include channel sensing. The method for channel sensing may be referred to the introduction provided above.

In operation S420, the first device sends first information to a second device.

In some implementations, the first information is associated with a first channel set. Alternatively, the first information is used to indicate a first channel set. Alternatively, the first information is used to determine a first channel set. Hereinafter, the first channel set in the embodiments of the disclosure will be introduced in conjunction with Embodiment 1.

### Embodiment 1: first channel set

In some implementations, the first channel set may be determined through channel access by the first device over the unlicensed spectrum. In other words, one or more channels in the first channel set are channels on which the first device obtains channel access over the unlicensed spectrum. For example, the first channel set is a channel set in which the first device successfully obtains transmission opportunity(s) (TXOP(s)). Alternatively, the first device obtains TXOP(s) on channel(s) included in the first channel set.

In an embodiment of the disclosure, the first channel set may be determined based on all channels on which the first device successfully obtains channel access over the unlicensed spectrum. For convenience of description, a channel set where all channels on which the first device successfully obtains channel access over the unlicensed spectrum are located is hereinafter referred to as a third channel set. In some implementations, all channels in the third channel set may belong to the first channel set, that is, the first channel set is identical to the third channel set. In other implementations, some of the channels in the third channel set may belong to the first channel set. That is to say, the first channel set is a subset of the third channel set.

Due to the varying utilization of channels in the unlicensed spectrum at different times, the channel sets for channel access obtained by the first device at different times are also different. In other words, the first channel set determined by the first device varies at different times.

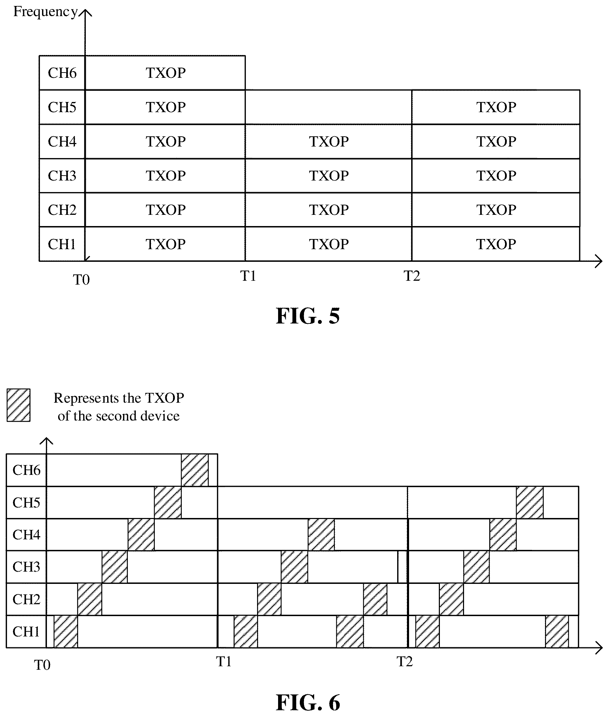

For convenience of understanding, the first channel set in the embodiments of the disclosure will be introduced hereinafter in conjunction with FIG. 5. FIG. 5 is a schematic diagram of a first channel set according to an embodiment of the disclosure. Assuming that the first device performs channel access at time T0, time T1, and time T2, respectively.

Referring to FIG. 5, at time T0, the channel set obtained by the first device by obtaining channel access over the unlicensed spectrum includes channel 1 to channel 6. That is to say, at time T0, the first channel set may include channel 1 to channel 6. At time T1, the channel set obtained by the first device by obtaining channel access over the unlicensed spectrum includes channel 1 to channel 4. That is to say, at time T1, the first channel set may include channel 1 to channel 4. At time T2, the channel set obtained by the first device by obtaining channel access over the unlicensed spectrum includes channel 1 to channel 5. That is to say, at time T2, the first channel set may include channel 1 to channel 5.

In the embodiment of the disclosure, after the first device indicates the first channel set to the second device, the second device may transmit based on the channels in the first channel set. Accordingly, the first channel set may be understood to include one or more channels available to the second device. Alternatively, the one or more channels may be channels through which the first device obtains channel access for transmission of the second device. For example, the TXOPs obtained by the first device on the channels included in the first channel set may be used by the second device; alternatively, the TXOPs obtained by the first device on the channels included in the first channel set may be used for transmission of the second device.

In some implementations, the first channel set may be determined based on a second channel set, and the second channel set may be a channel set for channel access by the first device. For example, the second channel set may be a channel set for channel sense by the first device over the unlicensed spectrum. For another example, the second channel set is a channel set for CCA by the first device over the unlicensed spectrum.

In some scenarios, not all channels in the second channel set on which the first device performs channel sense can successfully obtain channel access, and some channels in the second channel set are in a non-idle state, so that the first device cannot successfully obtain channel access. At this time, the channels on which channel access is obtained in the second channel set belong to the first channel set. Alternatively, the channels in the idle state in the second channel set may belong to the first channel set. That is to say, the first channel set may be a subset of the second channel set. Of course, in an embodiment of the disclosure, the first device may obtain channel access on all channels in the second channel set, and at this time, the first channel set may be identical to the second channel set. Alternatively, the first channel set may be the same with the second channel set.

In some implementations, the first device may set parameters associated with the second device to increase the priority of the second device in using the first channel set. In some implementations, the parameters associated with the second device may include parameters of the IFS. Accordingly, the first device may set a shorter IFS for the second device to increase the priority of the second device in using the first channel set. For example, the first device may set the IFS of the second device to a short IFS.

At present, to meet the fairness of different devices in using the unlicensed spectrum and reduce mutual interference, different countries and regions have formulated different specifications for the use of unlicensed spectrum (for example, unlicensed spectrum below 1 GHz). For example, some countries (e.g. China) specify that the operating mode of communication device in unlicensed spectrum is a frequency hopping pattern. Therefore, how does the second device operate in a frequency hopping pattern within the first channel set is an urgent problem to be solved.

In view of the above problem, a method for wireless communication is also provided in an embodiment of the disclosure. In the method, the first device may send first information to the second device so that the second device determines a frequency hopping pattern within the first channel set based on the first information. Alternatively, the first information is used to determine a frequency hopping pattern of the second device within the first channel set. For convenience of understanding, the following introduction is made in conjunction with Embodiment 2.

It should be noted that, in the embodiments of the disclosure, the first channel set may be any of the channel sets introduced above. Of course, in the embodiments of the disclosure, the first channel set may also be another channel set.

Furthermore, in the examples of the disclosure, the first information used to determine the frequency hopping pattern may be the same as the first information used to indicate the first channel set. Alternatively, the first information used to determine the frequency hopping pattern may be different from the first information used to indicate the first channel set.

Embodiment 2: the first information is associated with the frequency hopping pattern of the second device within the first channel set.

Accordingly, the second device may determine the frequency hopping pattern within the first channel set based on the first information. Alternatively, the second device may perform frequency hopping within the first channel set based on the first information.

In some implementations, the fact that the first information is associated with the frequency hopping pattern may include that the first information is used to determine the frequency hopping pattern of the second device within the first channel set. Hereinafter, a method for determining the frequency hopping pattern based on the first information in embodiments of the disclosure is described in conjunction with Example 1 to Example 3.

Example 1: the first information is used to indicate the first channel set.

In some implementations, the frequency hopping pattern may be determined based on the parameters associated with the frequency hopping pattern and the first channel set indicated by the first information. Alternatively, the second device may determine the frequency hopping pattern within the first channel set based on the parameters associated with the frequency hopping pattern and the first information.

In an embodiment of the disclosure, the parameters associated with the frequency hopping pattern may include one or more of: channel dwell time, channel switching time, and a channel offset value.

Taking the fact that the parameters associated with the frequency hopping pattern include the channel dwell time as an example, in some implementations, the channel dwell time may be used to determine a duration for which the second device dwells on each channel in the first channel set. For example, when the channel dwell time is 2 seconds, the duration for which the second device dwells on each channel in the first channel set is less than or equal to 2 seconds.

Taking the fact that the parameters associated with the frequency hopping pattern include the channel switching time as an example, in some implementations, the channel switching time may be used to determine a time at which the second device performs the channel switching in the first channel set. For example, when the channel switching time is 2 seconds, the time at which the second device performs the channel switching in the first channel set is 2 seconds later.

Taking the fact that the parameters associated with the frequency hopping pattern include the channel offset value as an example, in some implementations, the channel offset value is used to determine a target channel for frequency hopping performed by the first device within the first channel set. For example, the channel offset value may be a channel offset value between the target channel and the reference channel. Accordingly, the second device may determine the target channel based on the reference channel and the channel offset value. The reference channel is not limited in the embodiments of the disclosure. For example, the reference channel may be a channel currently used by the second device. For another example, the reference channel may be a preconfigured or predefined channel.

In an embodiment of the disclosure, the channel offset value may be an offset value of each channel index in the first channel set. For example, the channel index C(i) of the target channel may be determined based on the formula C(i) = (C(i - 1) + k)modN, where C(i - 1) represents a channel index of a reference channel, k represents a channel index offset, and N represents the number of channels included in a channel set. Of course, in the embodiments of the disclosure, the channel offset value may also be an offset value of the frequency corresponding to the channel, which is not limited in the embodiments of the disclosure.

For convenience of understanding, the frequency hopping pattern of the second device within the first channel set in the embodiments of the disclosure will be introduced hereinafter in conjunction with FIG. 6. Referring to FIG. 6, at time T0, the first channel set includes CH1 to CH6. Assuming that the channel dwell time of the second device is 2 seconds and the channel index offset value is 1, the second device will switch to the TXOP on CH2 after dwelling in the TXOP on CH1 for 2 seconds. After that, the second device will switch to the TXOP on CH3 after dwelling in the TXOP on CH2 for 2 seconds. After that, the second device will switch to the TXOP on CH4 after dwelling in the TXOP on CH3 for 2 seconds, and so on.

At time T1, the first channel set includes CH1 to CH4. Assuming that the channel dwell time of the second device is 2 seconds and the channel index offset value is 1, the second device will switch to the TXOP on CH2 after dwelling in the TXOP on CH1 for 2 seconds. After that, the second device will switch to the TXOP on CH3 after dwelling in the TXOP on CH2 for 2 seconds. After that, the second device will switch to the TXOP on CH4 after dwelling in the TXOP on CH3 for 2 seconds, and so on.

At time T2, the first channel set includes CH1 to CH5. Assuming that the channel dwell time of the second device is 2 seconds and the channel index offset value is 1, the second device will switch to the TXOP on CH2 after dwelling in the TXOP on CH1 for 2 seconds. After that, the second device will switch to the TXOP on CH3 after dwelling in the TXOP on CH2 for 2 seconds. After that, the second device will switch to the TXOP on CH4 after dwelling in the TXOP on CH3 for 2 seconds, and so on.

The acquisition method of the parameters associated with the frequency hopping pattern is not limited in the embodiments of the disclosure. In some implementations, the parameters associated with the frequency hopping pattern may be parameters preset by the second device. In other implementations, the parameters associated with the frequency hopping pattern may also be indicated by the first device. For example, the first device may indicate the parameters associated with the frequency hopping pattern through the first information. Of course, in the embodiments of the disclosure, the first device may indicate the parameters associated with the frequency hopping pattern through other information.

Taking the fact that the parameters associated with the frequency hopping pattern may be the parameters preset by the second device as an example, the parameters associated with the frequency hopping pattern may be understood as a preset rule. Accordingly, the second device may perform frequency hopping within the first channel set based on the first information and the preset rule. Alternatively, the second device may determine the frequency hopping pattern within the first channel set based on the first information and the preset rule. The preset rule indicates a rule that the second device changes its operating channel at the target time. Alternatively, the preset rule may be a frequency hopping rule of the second device.

It should be noted that, in the embodiments of the disclosure, the preset rule or the parameters associated with the frequency hopping pattern may be associated with multiple channel sets (for example, including the first channel set). That is to say, when the second device performs frequency hopping within multiple channel sets, the same preset rule or parameters associated with the frequency hopping pattern may be adopted, that is, the same frequency hopping pattern may be adopted. Of course, in the embodiments of the disclosure, the preset rule or the parameters associated with the frequency hopping pattern may be associated with one channel set (for example, the first channel set). That is to say, when the second device performs frequency hopping within each channel set, different preset rules or parameters associated with the frequency hopping pattern may be adopted, that is, different frequency hopping patterns may be adopted.

Example 2: the first information is used to determine a target channel for frequency hopping performed by the second device.

In some implementations, the target channel may be understood as a target channel for frequency hopping performed by the second device, or the target channel may be understood as a frequency hopping channel for frequency hopping performed by the second device.

Accordingly, the second device may determine the target channel for frequency hopping within the first channel set based on the first information, that is, the frequency hopping pattern performed by the second device within the first channel set.

In an embodiment of the disclosure, there are numerous methods for determining the target channel based on the first information, and the following introduction is made in conjunction with Example 2-1 and Example 2-2.

In Example 2-1, the first information is used to indicate a target channel.

That is to say, the target channel may be indicated by the first device to the second device in real time through the first information.

Assuming that the first channel set includes a channel 1 and a channel 2, after the second device sends data to the first device on the channel 1, the first device may indicate the channel 2 in the ACK frame corresponding to the data, and accordingly, the second device may hop to the channel 2 for subsequent transmission based on the first information.

The method for indicating the target channel is not limited in the embodiments of the disclosure. In some implementations, the first information may indicate the target channel by carrying a channel index of the target channel. In other implementations, the first information may indicate the target channel based on frequency information corresponding to the target channel.

In Example 2-2, the first information indicates a target channel by indicating an index sequence corresponding to the channels in the first channel set. In other words, the first information adjusts the target channel of the second device by adjusting the index sequence corresponding to the channels in the first channel set.

That is to say, the index of the target channel for frequency hopping performed by the second device remains unchanged, and when the first information indicates a change in the channel index sequence corresponding to the channel in the first channel set, the target channel of the second device will also change accordingly. At this time, the target channel may be determined based on the channel index sequence corresponding to the channel in the first channel set indicated by the first information and the channel index of the target channel.

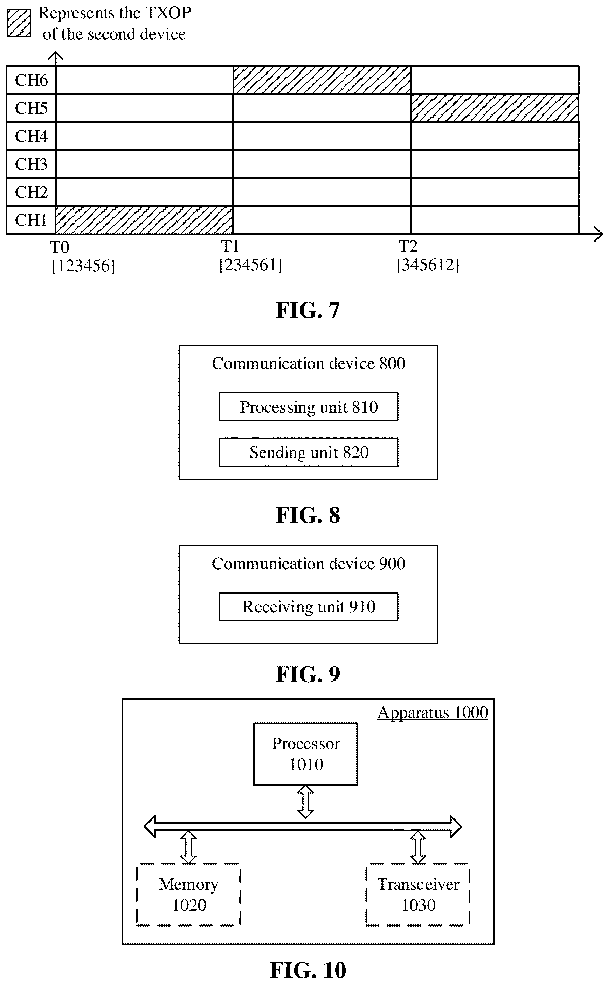

For convenience of understanding, it is described hereinafter. Referring to FIG. 7, assuming that the first channel set includes six channels, which may be denoted as CH1 to CH6 in ascending order of their frequencies. In other words, CH1 locates at the lowest frequency, while CH6 locates at the highest frequency. Furthermore, the channel index of the target channel of the second device is 1.

At time t0, the first information indicates that within the first channel set, the channel indexes corresponding to frequencies arranged in ascending order may be denoted as [123456]. At this time, the target channel corresponding to the channel index of 1 is CH1. At time t1, the first information indicates that within the first channel set, the channel indexes corresponding to frequencies arranged in ascending order may be denoted as [234561]. At this time, the target channel corresponding to the channel index of 1 is CH6. At time t2, the first information indicates that within the first channel set, the channel indexes corresponding to frequencies arranged in ascending order may be denoted as [345612]. At this time, the target channel corresponding to the channel index of 1 is CH5.

Therefore, in the embodiment of the disclosure, the index of the target channel of the second device remains unchanged, and channel frequency hopping is realized by changing the frequency of the channel bandwidth corresponding to the channel index indicated by the first information.

In some scenarios, the first information may be associated with multiple second devices, and at this time, the target channels of the multiple second devices may be jointly indicated by the first information. In some implementations, the index sequences, corresponding to different second devices in the multiple second devices, of the channels in the first channel set may be the same, while the channel indexes of the target channels corresponding to different second devices may be different.

For convenience of understanding, a method for indicating a target channel by first information in the embodiments of the disclosure will be introduced hereinafter in conjunction with FIG. 7. Referring to FIG. 7, assuming that the first channel set includes six channels, which may be denoted as CH1 to CH6 in ascending order of their frequencies. In other words, CH1 locates at the lowest frequency, while CH6 locates at the highest frequency. Furthermore, the channel index of the target channel of the second device 1 is 1, and the channel index of the target channel of the second device 2 is 2.

At time T0, the first information indicates that within the first channel set, the channel indexes corresponding to frequencies arranged in ascending order may be denoted as [123456]. At this time, the target channel corresponding to the channel index of 1 is CH1, and the target channel corresponding to the channel index of 2 is CH2. That is to say, the target channel of the second device 1 is CH1, and the target channel of the second device 2 is CH2. At time T1, the first information indicates that within the first channel set, the channel indexes corresponding to frequencies arranged in ascending order may be denoted as [234561]. At this time, the target channel corresponding to the channel index of 1 is CH6, and the target channel corresponding to the channel index of 2 is CH1. That is to say, the target channel of the second device 1 is CH6, and the target channel of the second device 2 is CH1. At time T2, the first information indicates that within the first channel set, the channel index corresponding to frequencies arranged in ascending order may be denoted as [345612]. At this time, the target channel corresponding to the channel index of 1 is CH5, and the target channel corresponding to the channel index of 2 is CH6. That is to say, the target channel of the second device 1 is CH5, and the target channel of the second device 2 is CH6.

Of course, in the embodiment of the disclosure, the index sequences, corresponding to different second devices in the multiple second devices, of the channels in the first channel set may be different, which are not limited in the embodiments of the disclosure.

Example 3: the first information may indicate whether the second device performs frequency hopping within the first channel set.

In some implementations, when the first information indicates that the second device performs frequency hopping within the first channel set, the second device may determine the frequency hopping pattern within the first channel set based on the first information and the parameters associated with the frequency hopping pattern.

It should be noted that the parameters associated with the frequency hopping pattern and their acquisition methods may be referred to the introduction of Example 2-1 provided above. For brevity, it will not be repeated herein.

In some scenarios, the first device may perform channel access for transmission of multiple second devices. That is to say, the first channel set may be associated with the multiple second devices. Alternatively, the first device may serve the multiple second devices. Accordingly, in some implementations, the first information may be associated with the multiple second devices, or the first information may be used to determine the frequency hopping patterns of the multiple second devices. In other implementations, the first information may indicate that a channel for frequency hopping performed by some or all of the multiple second devices is a target channel.

For example, the first information may include a bitmap. Different bits in the bitmap correspond to one of the multiple second devices. If the value of a certain bit in the bitmap is the first value, the channel for frequency hopping performed by the second device corresponding to the bit is the target channel. If the value of a certain bit in the bitmap is the second value, the channel for frequency hopping performed by the second device corresponding to the bit is not the target channel.

In other implementations, the first information may indicate that some or all of the multiple second devices perform frequency hopping in the first channel set.

For example, the first information may include a bitmap. Different bits in the bitmap correspond to one of the multiple second devices. If the value of a certain bit in the bitmap is a first value, the second device corresponding to the bit performs frequency hopping in the first channel set. If the value of a certain bit in the bitmap is a second value, the second device corresponding to the bit does not perform frequency hopping in the first channel set.

It should be noted that, the first value is different from the second value. For example, the first value may be 1, and accordingly, the second value may be 0. For another example, the first value may be 0, and accordingly, the second value may be 1.

In some scenarios, the second device needs to transmit on the corresponding TXOP(s) in the first channel set. Thus, in the embodiment of the disclosure, the first device may also indicate the TXOP(s) in the first channel set to the second device so that the second device may transmit within the corresponding TXOP(s). That is to say, the second device may determine the time domain resource and/or the frequency domain resource of the channel used by the second device based on the indication of the first device.

In the embodiment of the disclosure, the above information may be indicated by the first information. That is to say, the first information is associated with the TXOP(s) in the first channel set. Of course, in the embodiment of the disclosure, the above information may also be transmitted through other information. Hereinafter, the solution where the first information indicates the TXOP(s) in the first channel set in the embodiments of the disclosure will be introduced in conjunction with Embodiment 3.

Embodiment 3: the first information is used to indicate the TXOP(s) in the first channel set.

In some implementation, the first information is used to indicate one or more of: the TXOP(s) in the first channel set; second device(s) corresponding to the TXOP(s) in the first channel set; a first device corresponding to the TXOP(s) in the first channel set; service interval(s) within the TXOP(s) in the first channel set; or waking time(s) of second device(s) corresponding to the TXOP(s) in the first channel set.

Taking the fact that the first information is used to indicate the TXOP(s) in the first channel set as an example, in some implementations, the first information may be used to indicate time duration(s) of the TXOP(s) and/or end time(s) of the TXOP(s). Of course, in the embodiment of the disclosure, the first information may also indicate start time(s) of the TXOP(s).

Taking the fact that the first information is used to indicate the second device(s) corresponding to the TXOP(s) as an example, the second device corresponding to a TXOP may be understood as a second device that may use the TXOP. In some implementations, the first information may indicate second device(s) corresponding to the TXOP(s) by indicating device identifier(s) corresponding to the TXOP(s). In other implementations, the first information may indicate second device(s) corresponding to the TXOP(s) by indicating a device group identifier corresponding to the TXOP(s).

Taking the fact that the first information is used to indicate the first device corresponding to the TXOP(s) as an example, the first device corresponding to the TXOP(s) may be understood as a first device that obtains the TXOP(s) through channel access. In some implementations, the first information may indicate the first device through an identifier corresponding to the first device. Herein, the identifier corresponding to the first device may be, for example, one or more of: a basic service set identifier (BSSID), a compressed service set identifier (SSID), and a station identifier (STA ID).

Taking the fact that the first information is used to indicate the service interval(s) within the TXOP(s) as an example, a service interval within a TXOP may be understood as an available period of time or time window of a second device within the TXOP. In some implementations, the first information may indicate the service interval(s) within the TXOP(s) by indicating parameter(s) associated with the service interval(s) (also referred to as service interval parameter(s)). Herein, a parameter associated with the service interval may include a service time within the TXOP, a service period within the TXOP, or the like.

Taking the fact that the first information is used to indicate the wake time(s) of the second device(s) corresponding to the TXOP(s) as an example, or it may be said that the first information is used to determine the wake time(s) of the second device(s) in the TXOP(s). In some implementations, the first information may indicate a target wake time (TWT) of a second device in a TXOP through target wake time information.

The first information in the embodiments of the disclosure has been described above in connection with Embodiment 1 to Embodiment 3, and the transmission mode of the first information in the embodiments of the disclosure will be described below.

**In** some implementation, the first information may be carried in a control frame. In other implementations, the first information may also be carried in a management frame. For example, the first information may be carried in a beacon frame. For another example, the first information may be carried in a probe response frame. For another example, the first information may be carried in an association frame. Of course, in the embodiment of the disclosure, the control frame may also be carried in a data frame.

Taking the fact that the first information may be carried in the control frame as an example, the control frame is not specifically limited in the embodiments of the disclosure. In some implementations, the control frame may be an ACK frame. In other implementations, the control frame may be another control frame carrying the indication information. For example, the control frame may be a null data PPDU carrying medium access control information (NDP CMAC) frame.

In some implementation, the first information may be carried in a first channel. In some implementations, the first channel may be a preset channel. In other implementations, the first channel may be a primary channel. In other implementations, the first channel may be a channel corresponding to the second device.

Taking the fact that the first channel is the preset channel as an example, the first channel may be a preset channel in the first channel set. Of course, in the embodiments of the disclosure, the first channel may also be a channel that does not belong to the first channel set.

Taking the fact that the first channel is the primary channel as an example, the primary channel may be a channel in the first channel set. Of course, in the embodiments of the disclosure, the primary channel may not belong to the first channel set.

For example, the first information is used to indicate the first channel set. At this time, the first information may be carried by a beacon frame in the primary channel, and accordingly, the second device may acquire the first information by receiving the beacon frame in the primary channel.

For another example, the first information is used to indicate the first channel set. At this time, the first information may be carried by a probe response frame in the primary channel, and accordingly, the second device may acquire the first information by receiving the probe response frame in the primary channel.

For another example, the first information is used to indicate the first channel set. At this time, the first information may be carried by an association frame in the primary channel, and accordingly, the second device may acquire the first information by receiving the association frame in the primary channel.

It should be noted that, in a case where the first information is associated with the multiple second devices, if the first channels of the multiple second devices are different, the first device may transmit multiple pieces of first information through the first channels of the multiple second device to respectively indicate the multiple second devices. Alternatively, the first device may transmit the first information through the first channels respectively corresponding to the multiple second devices. Of course, if multiple second devices share the same first channel, the first device may transmit a piece of first information through the first channel to jointly indicate the multiple second devices.

In some implementations, the first channels corresponding to the multiple second devices may belong to the first channel set. At this time, it may be understood that the first information may be transmitted on some or all of the channels in the first channel set.

It should be noted that, a first channel is a channel corresponding to a second device. It may be understood that the first channel may be a channel used by the second device, or that the first channel is a channel currently used by the second device. For example, the first information may be transmitted via a channel currently occupied by a TXOP of the second device.

Taking the fact that the first information is transmitted through the ACK frame as an example, if the second device sends data to the first device on channel 1, the channel 1 is the channel currently used by the second device. At this time, the first device may carry the first information in the ACK frame via the channel 1.

In some implementations, in response to receiving the first information, the second device determines, based on the first information, a target channel from the first channel set to communicate with the first device. For example, the second device may send data to the first device via the target channel. The method for determining the target channel based on the first information may refer to the description provided above. For brevity, it will not be repeated herein.

In some scenarios, the result of channel frequency hopping of the first device may be inconsistent with the result of channel frequency hopping of the second device; or, the target channel determined by the first device may be different from the target channel determined by the second device. For example, when the second device loses the first information sent by the first device, it will result in a difference between the target channel determined by the second device and the target channel determined by the first device. Such a situation may cause communication failure between the first device and the second device.

Therefore, in view of the above problems, initialization of channel frequency hopping between the first device and the second device may be performed at the target time. After initialization, the second device may return to the second channel (also referred to as the "initialization channel"). At this time, the first device may establish reliable communication with the second device via the second channel.

In some implementations, initialization of channel frequency hopping may be performed periodically between the first device and the second device. Of course, the first device may also indicate the second device in real time to initialize channel frequency hopping, which is not limited in the embodiments of the disclosure.

In an embodiment of the disclosure, the second channel may be a channel used when the second device communicates with the first device for the first time. Of course, in an embodiment of the disclosure, the second channel may also be any channel agreed upon between the first device and the second device.

The method embodiments of the disclosure are described in detail above in conjunction with FIG. 1 to FIG. 7. The apparatus embodiments of the disclosure will be described in detail below in conjunction with FIG. 8 to FIG. 10. It should be understood that the description of the method embodiments corresponds to the description of the apparatus embodiments. Therefore, for sections not described in detail, reference may be made to the preceding method embodiments.

FIG. 8 is a schematic diagram of a communication device in an embodiment of the disclosure. The communication device 800 illustrated in FIG. 8 is a first device. The communication device 800 illustrated in FIG. 8 may include a processing unit 810 and a sending unit 820.

The processing unit 810 is configured to perform channel access on multiple channels to determine a first channel set.

The sending unit 820 is configured to send first information to a second device. The first information is associated with the first channel set.

In one possible implementation, the first channel set is determined based on a second channel set, and the second channel set includes the multiple channels on which the first device performs the channel access.

In one possible implementation, the first channel set is the same as the second channel set, or the first channel set is a subset of the second channel set.

In one possible implementation, the fact that the first information is associated with the first channel set includes that the first information is associated with a frequency hopping pattern of the second device within the first channel set.

In one possible implementation, the first information is used to indicate the first channel set, and the frequency hopping pattern is determined based on the first channel set and parameter(s) associated with the frequency hopping pattern.

In one possible implementation, the parameter(s) associated with the frequency hopping pattern include one or more of: channel dwell time, channel switching time, or a channel offset value.

In one possible implementation, the parameter(s) associated with the frequency hopping pattern is preset, or the parameter(s) associated with the frequency hopping pattern is indicated by the first information.

In one possible implementation, the first information is used to indicate one or more of: that the second device performs frequency hopping within the first channel set; or a target channel for frequency hopping performed by the second device within the first channel set.

In one possible implementation, if the first information is used to indicate a target channel, the first information is used to indicate an index sequence corresponding to channels in the first channel set, and the target channel is determined based on an index of a target channel corresponding to the second device and the index sequence corresponding to the channels in the first channel set.

In one possible implementation, if the first information is used to indicate the target channel for frequency hopping performed by the second device within the first channel set, the first channel set is associated with multiple second devices, and the first information is used to indicate that a channel for frequency hopping performed by some or all of the multiple second devices is the target channel.

In one possible implementation, the first information includes a bitmap, different bits in the bitmap correspond to one of the multiple second devices, and a channel for frequency hopping performed by the second device corresponding to a bit with a value of a first value in the bitmap is the target channel.

In one possible implementation, the fact that the first information is associated with the first channel set includes that the first information is associated with TXOP(s) in the first channel set.

In one possible implementation, the first information is used to indicate one or more of: the TXOP(s) in the first channel set; second device(s) corresponding to the TXOP(s) in the first channel set; a first device corresponding to the TXOP(s) in the first channel set; service interval(s) within the TXOP(s) in the first channel set; or waking time(s) of second device(s) corresponding to the TXOP(s) in the first channel set.

In one possible implementation, the first information is carried in a control frame.

In one possible implementation, the first information is carried on a first channel. The first channel is a preset channel or a channel corresponding to the second device.

In one possible implementation, the second device is a zero-power terminal.

FIG. 9 is a schematic diagram of a communication device in another embodiment of the disclosure. The communication device 900 illustrated in FIG. 9 may be a second device. The communication device 900 illustrated in FIG. 9 includes a receiving unit 910.

The receiving unit 910 is configured to receive first information sent by a first device. The first information is associated with a first channel set determined by the first device through channel access on a plurality of channels.

In one possible implementation, the first channel set is determined based on a second channel set, and the second channel set includes the multiple channels on which the first device performs the channel access.

In one possible implementation, the first channel set is the same as the second channel set, or the first channel set is a subset of the second channel set.

In one possible implementation, the fact that the first information is associated with the first channel set includes that the first information is associated with a frequency hopping pattern of the second device within the first channel set.

In one possible implementation, the first information is used to indicate the first channel set, and the frequency hopping pattern is determined based on the first channel set and parameter(s) associated with the frequency hopping pattern.

In one possible implementation, the parameter(s) associated with the frequency hopping pattern include one or more of: channel dwell time, channel switching time, or a channel offset value.

In one possible implementation, the parameter(s) associated with the frequency hopping pattern is preset, or the parameter(s) associated with the frequency hopping pattern is indicated by the first information.

In one possible implementation, the first information is used to indicate one or more of: that the second device performs frequency hopping within the first channel set; or a target channel for frequency hopping performed by the second device within the first channel set.

In one possible implementation, if the first information is used to indicate a target channel, the first information is used to indicate an index sequence corresponding to channels in the first channel set, and the target channel is determined based on an index of a target channel corresponding to the second device and the index sequence corresponding to the channels in the first channel set.

In one possible implementation, if the first information is used to indicate the target channel for frequency hopping performed by the second device within the first channel set, the first channel set is associated with multiple second devices, and the first information is used to indicate that a channel for frequency hopping performed by some or all of the multiple second devices is the target channel.

In one possible implementation, the first information includes a bitmap, different bits in the bitmap correspond to one of the multiple second devices, and a channel for frequency hopping performed by the second device corresponding to a bit with a value of a first value in the bitmap is the target channel.

In one possible implementation, the fact that the first information is associated with the first channel set includes that the first information is associated with TXOP(s) in the first channel set.

In one possible implementation, the first information is used to indicate one or more of: the TXOP(s) in the first channel set; second device(s) corresponding to the TXOP(s) in the first channel set; a first device corresponding to the TXOP(s) in the first channel set; service interval(s) within the TXOP(s) in the first channel set; or waking time(s) of a second device(s) corresponding to the TXOP(s) in the first channel set.

In one possible implementation, the first information is carried in a control frame.

In one possible implementation, the first information is carried on a first channel. The first channel is a preset channel or a channel corresponding to the second device.

In one possible implementation, the second device is a zero-power terminal.

In an optical embodiment, the processing unit 810 may be the processor 1010, and the sending unit 820 may be the transceiver 1030. The communication device 800 may further include a memory 1020, as specifically illustrated in FIG. 10.

In an optical embodiment, the receiving unit 910 may be a transceiver 1030. The communication device 900 may further include a processor 1010 and a memory 1020, as specifically illustrated in FIG. 10.

FIG. 10 is a schematic structural diagram of a communication apparatus according to an embodiment of the disclosure. The dotted line in FIG. 10 indicates that the unit or module is optional. The apparatus 1000 may be used to implement the methods described in the above method embodiments. The apparatus 1000 may be a chip, a terminal device, or a network device.

The apparatus 1000 may include one or more processors 1010. The processor 1010 is configured to enable the apparatus 1000 to implement the methods described in the above method embodiments. The processor 1010 may be a general-purpose processor or a special-purpose processor. For example, the processor may be a central processing unit (CPU). Alternatively, the processor may be another general-purpose processor, a digital signal processor (DSP), an application specific integrated circuit (ASIC), a field programmable gate array (FPGA) or another programmable logic device, a discrete gate or transistor logic device, or a discrete hardware component. The general-purpose processor may be a microprocessor, or any conventional processor or the like.

The apparatus 1000 may further include one or more memories 1020. The memory 1020 has stored thereon a program that may be executed by the processor 1010 to cause the processor 1010 to perform any of the methods described in the above method embodiments. The memory 1020 may be independent of the processor 1010, or may be integrated in the processor 1010.

The device 1000 may further include a transceiver 1030. The processor 1010 may communicate with other devices or chips through the transceiver 1030. For example, the processor 1010 may transmit data to or receive data from other devices or chips through the transceiver 1030.

In the embodiments of the disclosure, a computer-readable storage medium for storing a program is further provided. The computer-readable storage medium may be applied to the terminal or the network device according to an embodiment of the disclosure, and the program causes the computer to perform the method performed by the terminal or the network device in each of the embodiments of the disclosure.

In the embodiment of the disclosure, a computer program product is further provided. The computer program product includes a program. The computer program product may be applied to the terminal or the network device according to an embodiment of the disclosure, and the program causes the computer to perform the method performed by the terminal or the network device in each of the embodiments of the disclosure.

In the embodiment of the disclosure, a computer program is further provided. The computer program may be applied to the terminal or the network device according to an embodiment of the disclosure, and the computer program causes the computer to perform the method performed by the terminal or the network device in each of the embodiments of the disclosure.

It should be understood that the terms "system" and "network" may be used interchangeably in the disclosure. In addition, the terms used in the disclosure are only for the purpose of explanation of specific embodiments in the disclosure, and are not intended to limit the disclosure. The terms "first," "second," "third," and "fourth" and the like in the description, the claims and the drawings of the disclosure are used to distinguish different objects, but not used to describe a particular order. Furthermore, the terms "comprise" and "have" and any variations thereof are intended to cover non-exclusive inclusions.

In the embodiments of the disclosure, the mentioned "indicate/indication" may be a direct indication, or may be an indirect indication, or may represent that there is an association relationship. For example, A indicates B, which may represent that A indicates B directly, for example, B may be acquired through A; or, may represent A indicate B indirectly, for example, A indicates C, and B may be acquired through C; or may represent that there is an association relationship between A and B.

In the embodiments of the disclosure, "B corresponding to A" represents that B is associated with A, and B may be determined based on A. However, it should also be understood that, "B is determined based on A" does not mean that B is determined merely based on A, but that B may also be determined based on A and/or other information.

In an embodiment of the disclosure, the term "correspond/correspondence" may represent that there is a direct or indirect correspondence between the two objects; or, may represent that there is an association relationship between two objects; or, may be a relationship such as indicating and being indicated, configuring and being configured, etc.

In an embodiment of the disclosure, "predefined" or "preconfigured" may be implemented by storing corresponding codes, tables, or other means which may be used to indicate relevant information in advance within a device (including, for example, a terminal device and a network device), the specific implementation thereof is not be limited in the disclosure. For example, "predefined" may be "defined in a protocol".

In an embodiment of the disclosure, the "protocol" may be a standard protocol in the field of communications, and for example, it may include an LTE protocol, an NR protocol, and relevant protocols applied to future communication systems, which are not limited in the disclosure.

In an embodiment of the disclosure, the term "and/or" merely indicates an association relationship for describing associated objects, and represents that there are three kinds of relationships. For example, "A and/or B" may represent three situations, i.e., independent existence of A, existence of both A and B, and independent existence of B. In addition, the character "/" herein generally represents that the previous and next objects form a kind of "or" relationship.

In various embodiments of the disclosure, the values of the sequence numbers of the aforementioned processes do not imply the sequence of execution. The sequence of execution of the processes should be determined based on functions thereof and inherent logics, and the values of the sequence numbers should not constitute any limitation on the implementation processes of the embodiments of the disclosure.

In several embodiments provided in the disclosure, it is to be understood that the disclosed systems, devices, and methods may be implemented in other ways. For example, the device embodiments described above are only schematic. For example, the partition of the unit is only a kind of logical functional partition, and other partition manners may be adopted during practical implementation. For example, multiple units or components may be combined or integrated into another system, or some features may be omitted or not implemented. In addition, coupling or direct coupling or communication connection between various displayed or discussed components may be indirect coupling or communication connection, implemented through some interfaces, devices or units, and may be an electrical or mechanical connection or in other forms.

The units described as separate components may or may not be physically separate, and the components displayed as units may or may not be physical units, that is, may be located in one place or be distributed to multiple network units. Part or all of the units may be selected based on the actual needs to achieve the purpose of the solution of the present embodiment.

Moreover, various functional units in the embodiments of the disclosure may be integrated into one processing unit, or they may be physically exist separately as individual units, or two or more units may be integrated into one unit.

In the embodiments described above, it may be implemented in whole or in part by software, hardware, firmware, or any combination thereof. When implemented by using software, it may be implemented in whole or in part in the form of a computer program product. The computer program product includes one or more computer instructions. When the computer program instructions are loaded and executed on a computer, processes or functions in the embodiments of the disclosure are generated in whole or in part. The computer may be a general-purpose computer, a dedicated computer, a computer network, or other programmable devices. The computer instructions may be stored in a computer readable storage medium, or may be transmitted from one computer readable storage medium to another computer readable storage medium. For example, the computer instructions may be transmitted from one website, computer, server, or data center to another website, computer, server, or data center in a wired (e.g. coaxial cable, fiber optic, digital subscriber line (DSL)) or wireless (e.g. infrared, wireless, microwave, etc.) way. The computer-readable storage medium may be any available medium accessible by a computer or a data storage device containing a server, a data center and the like integrated by one or more available media. The available medium may be a magnetic medium (e.g., a floppy disk, a hard disk, a magnetic tape), an optical medium (e.g., a digital video disc (DVD)), or a semiconductor medium (e.g., a solid state disk (SSD)), etc.

The foregoing are only the specific implementations of the disclosure; however, the scope of protection of the disclosure is not limited thereto. Variations or replacements which can be readily conceived by those skilled in the art within the technical scope disclosed by the disclosure shall fall within the scope of protection of the disclosure. Therefore, the scope of protection of the disclosure shall be determined by the scope of protection of the claims.

## Claims

1. A method for wireless communication, comprising:
performing, by a first device, channel access on a plurality of channels to determine a first channel set; and
sending, by the first device, first information to a second device, wherein the first information is associated with the first channel set.

2. The method of claim 1, wherein the first channel set is determined based on a second channel set, and the second channel set comprises the plurality of channels on which the first device performs the channel access.

3. The method of claim 2, wherein the first channel set is identical to the second channel set, or the first channel set is a subset of the second channel set.

4. The method of any one of claims 1 to 3, wherein the fact that the first information is associated with the first channel set comprises that the first information is associated with a frequency hopping pattern of the second device within the first channel set.

5. The method of claim 4, wherein the first information is used to indicate the first channel set, and the frequency hopping pattern is determined based on the first channel set and parameter(s) associated with the frequency hopping pattern.

6. The method of claim 5, wherein the parameter(s) associated with the frequency hopping pattern comprises one or more of: channel dwell time, channel switching time, or a channel offset value.

7. The method of claim 5 or 6, wherein the parameter(s) associated with the frequency hopping pattern is preset, or the parameter(s) associated with the frequency hopping pattern is indicated by the first information.

8. The method of claim 4, wherein the first information is used to indicate one or more of:
that the second device performs frequency hopping within the first channel set; or
a target channel for frequency hopping performed by the second device within the first channel set.

9. The method of claim 8, wherein if the first information is used to indicate a target channel, the first information is used to indicate an index sequence corresponding to channels in the first channel set, and the target channel is determined based on an index of a target channel corresponding to the second device and the index sequence corresponding to the channels in the first channel set.

10. The method of claim 8 or 9, wherein if the first information is used to indicate the target channel for frequency hopping performed by the second device within the first channel set, the first channel set is associated with a plurality of second devices, and the first information is used to indicate that a channel for frequency hopping performed by some or all of the plurality of second devices is the target channel.

11. The method of claim 10, wherein the first information comprises a bitmap, different bits in the bitmap correspond to one of the plurality of second devices, and a channel for frequency hopping performed by the second device corresponding to a bit with a value of a first value in the bitmap is the target channel.

12. The method of any one of claims 1 to 11, wherein the fact that the first information is associated with the first channel set comprises that the first information is associated with transmission opportunity(s) (TXOP(s)) in the first channel set.

13. The method of claim 12, wherein the first information is used to indicate one or more of:
the TXOP(s) in the first channel set;
second device(s) corresponding to the TXOP(s) in the first channel set;
a first device corresponding to the TXOP(s) in the first channel set;
service interval(s) within the TXOP(s) in the first channel set; or
waking time(s) of second device(s) corresponding to the TXOP(s) in the first channel set.

14. The method of any one of claims 1 to 13, wherein the first information is carried in a control frame.

15. The method of any one of claims 1 to 14, wherein the first information is carried on a first channel, and the first channel is a preset channel or a channel corresponding to the second device.

16. The method of any one of claims 1 to 15, wherein the second device is a zero-power terminal.

17. A method for wireless communication, comprising:
receiving, by a second device, first information sent by a first device, wherein the first information is associated with a first channel set determined by the first device through channel access on a plurality of channels.

18. The method of claim 17, wherein the first channel set is determined based on a second channel set, and the second channel set comprises the plurality of channels on which the first device performs the channel access.

19. The method of claim 18, wherein the first channel set is identical to the second channel set, or the first channel set is a subset of the second channel set.

20. The method of any one of claims 17 to 19, wherein the fact that the first information is associated with the first channel set comprises that the first information is associated with a frequency hopping pattern of the second device within the first channel set.

21. The method of claim 20, wherein the first information is used to indicate the first channel set, and the frequency hopping pattern is determined based on the first channel set and parameter(s) associated with the frequency hopping pattern.

22. The method of claim 21, wherein the parameter(s) associated with the frequency hopping pattern comprises one or more of: channel dwell time, channel switching time, or a channel offset value.

23. The method of claim 21 or 22, wherein the parameter(s) associated with the frequency hopping pattern is preset, or the parameter(s) associated with the frequency hopping pattern is indicated by the first information.

24. The method of claim 20, wherein the first information is used to indicate one or more of:
that the second device performs frequency hopping within the first channel set; or
a target channel for frequency hopping performed by the second device within the first channel set.

25. The method of claim 24, wherein if the first information is used to indicate a target channel, the first information is used to indicate an index sequence corresponding to channels in the first channel set, and the target channel is determined based on an index of a target channel corresponding to the second device and the index sequence corresponding to the channels in the first channel set.

26. The method of claim 24 or 25, wherein if the first information is used to indicate the target channel for frequency hopping performed by the second device within the first channel set, the first channel set is associated with a plurality of second devices, and the first information is used to indicate that a channel for frequency hopping performed by some or all of the plurality of second devices is the target channel.

27. The method of claim 26, wherein the first information comprises a bitmap, different bits in the bitmap correspond to one of the plurality of second devices, and a channel for frequency hopping performed by the second device corresponding to a bit with a value of a first value in the bitmap is the target channel.

28. The method of any one of claims 17 to 27, wherein the fact that the first information is associated with the first channel set comprises that the first information is associated with transmission opportunity(s) (TXOP(s)) in the first channel set.

29. The method of claim 28, wherein the first information is used to indicate one or more of:
the TXOP(s) in the first channel set;
second device(s) corresponding to the TXOP(s) in the first channel set;
a first device corresponding to the TXOP(s) in the first channel set;
service interval(s) within the TXOP(s) in the first channel set; or
waking time(s) of second device(s) corresponding to the TXOP(s) in the first channel set.

30. The method of any one of claims 17 to 29, wherein the first information is carried in a control frame.

31. The method of any one of claims 17 to 30, wherein the first information is carried on a first channel, and the first channel is a preset channel or a channel corresponding to the second device.

32. The method of any one of claims 17 to 31, wherein the second device is a zero-power terminal.

33. A communication device, wherein the communication device is a first device, and comprises:
a processing unit, configured to perform channel access on a plurality of channels to determine a first channel set; and
a sending unit, configured to send first information to a second device, wherein the first information is associated with the first channel set.

34. The communication device of claim 33, wherein the first channel set is determined based on a second channel set, and the second channel set comprises the plurality of channels on which the first device performs the channel access.

35. The communication device of claim 32, wherein the first channel set is identical to the second channel set, or the first channel set is a subset of the second channel set.

36. The communication device of any one of claims 33 to 35, wherein the fact that the first information is associated with the first channel set comprises that the first information is associated with a frequency hopping pattern of the second device within the first channel set.

37. The communication device of claim 36, wherein the first information is used to indicate the first channel set, and the frequency hopping pattern is determined based on the first channel set and parameter(s) associated with the frequency hopping pattern.

38. The communication device of claim 37, wherein the parameter(s) associated with the frequency hopping pattern comprises one or more of: channel dwell time, channel switching time, or a channel offset value.

39. The communication device of claim 37 or 38, wherein the parameter(s) associated with the frequency hopping pattern is preset, or the parameter(s) associated with the frequency hopping pattern is indicated by the first information.

40. The communication device of claim 36, wherein the first information is used to indicate one or more of:
that the second device performs frequency hopping within the first channel set; or
a target channel for frequency hopping performed by the second device within the first channel set.

41. The communication device of claim 40, wherein if the first information is used to indicate a target channel, the first information is used to indicate an index sequence corresponding to channels in the first channel set, and the target channel is determined based on an index of a target channel corresponding to the second device and the index sequence corresponding to the channels in the first channel set.

42. The communication device of claim 40 or 41, wherein if the first information is used to indicate the target channel for frequency hopping performed by the second device within the first channel set, the first channel set is associated with a plurality of second devices, and the first information is used to indicate that a channel for frequency hopping performed by some or all of the plurality of second devices is the target channel.

43. The communication device of claim 42, wherein the first information comprises a bitmap, different bits in the bitmap correspond to one of the plurality of second devices, and a channel for frequency hopping performed by the second device corresponding to a bit with a value of a first value in the bitmap is the target channel.

44. The communication device of any one of claims 33 to 43, wherein the fact that the first information is associated with the first channel set comprises that the first information is associated with transmission opportunity(s) (TXOP(s)) in the first channel set.

45. The communication device of claim 44, wherein the first information is used to indicate one or more of:
the TXOP(s) in the first channel set;
second device(s) corresponding to the TXOP(s) in the first channel set;
a first device corresponding to the TXOP(s) in the first channel set;
service interval(s) within the TXOP(s) in the first channel set; or
waking time(s) of second device(s) corresponding to the TXOP(s) in the first channel set.

46. The communication device of any one of claims 33 to 45, wherein the first information is carried in a control frame.

47. The communication device of any one of claims 33 to 46, wherein the first information is carried on a first channel, and the first channel is a preset channel or a channel corresponding to the second device.

48. The communication device of any one of claims 33 to 47, wherein the second device is a zero-power terminal.

49. A communication device, wherein the communication device is a second device, and comprises:
a receiving unit, configured to receive first information sent by a first device, wherein the first information is associated with a first channel set determined by the first device through channel access on a plurality of channels.

50. The communication device of claim 49, wherein the first channel set is determined based on a second channel set, and the second channel set comprises the plurality of channels on which the first device performs the channel access.

51. The communication device of claim 50, wherein the first channel set is identical to the second channel set, or the first channel set is a subset of the second channel set.

52. The communication device of any one of claims 49 to 51, wherein the fact that the first information is associated with the first channel set comprises that the first information is associated with a frequency hopping pattern of the second device within the first channel set.

53. The communication device of claim 52, wherein the first information is used to indicate the first channel set, and the frequency hopping pattern is determined based on the first channel set and parameter(s) associated with the frequency hopping pattern.

54. The communication device of claim 53, wherein the parameter(s) associated with the frequency hopping pattern comprises one or more of: channel dwell time, channel switching time, or a channel offset value.

55. The communication device of claim 53 or 54, wherein the parameter(s) associated with the frequency hopping pattern is preset, or the parameter(s) associated with the frequency hopping pattern is indicated by the first information.

56. The communication device of claim 52, wherein the first information is used to indicate one or more of:
that the second device performs frequency hopping within the first channel set; or
a target channel for frequency hopping performed by the second device within the first channel set.

57. The communication device of claim 56, wherein if the first information is used to indicate a target channel, the first information is used to indicate an index sequence corresponding to channels in the first channel set, and the target channel is determined based on an index of a target channel corresponding to the second device and the index sequence corresponding to the channels in the first channel set.

58. The communication device of claim 56 or 57, wherein if the first information is used to indicate the target channel for frequency hopping performed by the second device within the first channel set, the first channel set is associated with a plurality of second devices, and the first information is used to indicate that a channel for frequency hopping performed by some or all of the plurality of second devices is the target channel.

59. The communication device of claim 58, wherein the first information comprises a bitmap, different bits in the bitmap correspond to one of the plurality of second devices, and a channel for frequency hopping performed by the second device corresponding to a bit with a value of a first value in the bitmap is the target channel.

60. The communication device of any one of claims 49 to 59, wherein the fact that the first information is associated with the first channel set comprises that the first information is associated with transmission opportunity(s) (TXOP(s)) in the first channel set.

61. The communication device of claim 60, wherein the first information is used to indicate one or more of:
the TXOP(s) in the first channel set;
second device(s) corresponding to the TXOP(s) in the first channel set;
a first device corresponding to the TXOP(s) in the first channel set;
service interval(s) within the TXOP(s) in the first channel set; or
waking time(s) of second device(s) corresponding to the TXOP(s) in the first channel set.

62. The communication device of any one of claims 49 to 61, wherein the first information is carried in a control frame.

63. The communication device of any one of claims 49 to 62, wherein the first information is carried on a first channel, and the first channel is a preset channel or a channel corresponding to the second device.

64. The communication device of any one of claims 49 to 63, wherein the second device is a zero-power terminal.

65. A communication device, comprising a transceiver, a memory and a processor, the memory is configured to store a program and the processor is configured to invoke the program in the memory and control the transceiver to receive or send a signal to cause a terminal to perform the method of any one of claims 1 to 32.

66. An apparatus, comprising a processor configured to invoke a program from a memory to cause the apparatus to perform the method of any one of claims 1 to 32.

67. A chip, comprising a processor configured to invoke a program from a memory to cause a device in which the chip is installed to perform the method of any one of claims 1 to 32.

68. A computer readable storage medium having stored thereon a program that causes a computer to perform the method of any one of claims 1 to 32.

69. A computer program product, comprising a program that causes a computer to perform the method of any one of claims 1 to 32.

70. A computer program that causes a computer to perform the method of any one of claims 1 to 32.
